# EUROPÄISCHE PATENTANMELDUNG

(11) **EP 4 667 739 A1**
(43) Veröffentlichungstag der Anmeldung: **24.12.2025**
(21) Anmeldenummer: 25183470.1
(22) Anmeldetag: 17.06.2025
(51) Int. Cl.: F03D 1/06, F03D 80/70

(54) **WINDKRAFTANLAGE**

(30) Priorität: 17.06.2024 DE 102024116974
(71) Anmelder: Deutsches Zentrum für Luft- und Raumfahrt e.V., 53227 Bonn-Oberkassel (DE)
(72) Erfinder: Beyland, Lutz, 38110 Braunschweig (DE)
(74) Vertreter: Gramm, Lins & Partner Patent- und Rechtsanwälte PartGmbB

(57) **Zusammenfassung**

Die Erfindung betrifft eine Windkraftanlage mit einer Rotornabe und mit mindestens einem Rotorblatt, dessen Blattwurzel mit einer Befestigungsanordnung an einem Lagerring eines Rotorblattlagers der Rotornabe befestigt oder befestigbar ist, sodass mittels des Rotorblattlagers durch Drehung des Lagerrings gegenüber der Rotornabe das Rotorblatt relativ zu der Rotornabe um seine Längsachse drehbar ist, **dadurch**
**gekennzeichnet, dass**
a. die Befestigungsanordnung eine Mehrzahl von Befestigungsgarnituren aufweist,
b. wobei jede Befestigungsgarnitur mindestens einen ersten Querbolzen, mindestens einen zweiten Querbolzen und wenigstens eine Befestigungslasche mit mindestens einer ersten Laschenöffnung und mindestens einer zweiten Laschenöffnung hat, und
c. wobei bei jeder Befestigungsgarnitur der wenigstens eine erste Querbolzen quer zur Längsachse des Rotorblattes durch eine erste Bolzenöffnung im Lagerring sowie durch die erste Laschenöffnung der Befestigungslasche und der zweite Querbolzen quer zur Längsachse des Rotorblattes durch eine zweite Bolzenöffnung in der Blattwurzel des Rotorblattes sowie durch die zweite Laschenöffnung geführt ist.

## Beschreibung

Die Erfindung betrifft eine Windkraftanlage mit einer Rotornabe und mit mindestens einem Rotorblatt, dessen Blattwurzel mit einer Befestigungsanordnung an einem Lagerring eines Rotorblattlagers der Rotornabe befestigt oder befestigbar ist, sodass mittels des Rotorblattlagers durch Drehung des Lagerrings gegenüber der Rotornabe das Rotorblatt relativ zu der Rotornabe um seine Längsachse drehbar ist.

Aufgrund der gewichtsspezifischen Festigkeit und Steifigkeit von Faserverbundbauteilen, die aus Faserverbundwerkstoffen hergestellt werden, sind derartige Bauteile aus der Luft- und Raumfahrt sowie aus der Automobilebereich heutzutage kaum mehr wegzudenken. Aber auch die Herstellung von großskaligen Rotorblätter, bspw. für Windkraftanlagen, ist mit Faserverbundwerkstoffen heutzutage möglich und auch sinnvoll. Bei der Herstellung eines Faserverbundbauteils wird dabei ein in ein Fasermaterial infundiertes Matrixmaterial meist unter Temperatur- und Druckbeaufschlagung ausgehärtet bzw. konsolidiert und bildet so nach dem Aushärten eine integrale Einheit mit dem Fasermaterial. Die Verstärkungsfasern des Fasermaterials werden hierdurch in die vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen.

Neben trockenen Fasermaterialien, die in einem anschließenden Infusionsprozess mit dem Matrixmaterial infundiert werden müssen, werden auch bereits vorimprägnierte Fasermaterialien (sogenannte Prepregs) verwendet, bei denen das Fasermaterial mit dem Matrixmaterial bereits vorimprägniert ist. Ein anschließender Infusionsprozess ist dann in der Regel nicht mehr notwendig. Vor dem Aushärten des Matrixmaterials wird in der Regel das Fasermaterial in ein Formwerkzeug eingebracht, dass mit seiner formgebenden Werkzeugoberfläche die spätere Bauteileilform nachbildet.

Diesen vorteilhaften Eigenschaften steht nachteilig die Tatsache entgegen, dass die Herstellung von Faserverbundbauteilen sehr kostenintensiv ist, da sich die Herstellungsprozesse zum Teil nicht automatisieren lassen oder bei automatisierten Prozessen vermehrt der Blick auf die Qualitätssicherung gelegt werden muss, um fehlerhafte Bauteile aufgrund der Prozessungenauigkeiten auffinden zu können.

Hierneben existieren auch Mischformen, bei denen ein Faserverbundwerkstoff beispielsweise mit einem Metallwerkstoff kombiniert wird, umso ein Faser-Metall-Laminat zu bilden. Dabei wird das Laminat aus sich abwechselnden Schichten eines Fasermaterials des Faserverbundwerkstoffes und eines Metallwerkstoff gebildet. Solche Faser-Metall-Laminate weisen dabei eine besonders hohe Lochleibungsfestigkeit auf und eignen sich insbesondere für Anbindungskonzepte.

Es ist bekannt, Rotorblätter für Windkraftanlagen aus einem Faserverbundwerkstoff herzustellen, um so bei immer größer werdenden Abmessungen der Rotorblätter und Windkraftanlagen ein dennoch niedrigeres Gewicht zu erreichen als bei klassischen isotropen Werkstoffen (beispielsweise Aluminium). Aufgrund der anisotropen Eigenschaften von Faserverbundwerkstoffen werden jedoch an die Anbindungs- und Verbindungskonzepte höhere Anforderungen gestellt, wodurch sich mitunter negative Effekte feststellen lassen und die Vorteile, die durch die Verwendung von Faserverbundwerkstoffen erzielt werden sollen, geschmälert werden.

So ist es bei sehr großen Rotorblättern notwendig, diese für den Transport zu segmentieren und am jeweiligen Einsatzort zusammenzusetzen. Aus der DE 10 2016 123 346 B3 ist ein Verbindungskonzept zum Verbinden von segmentierten Rotorblättern bekannt, bei dem mithilfe einer Spannbuchse eine Vorspannung in der Bohrung des Faserverbundwerkstoffes zum Hindurchführen des Befestigungsbolzens erzeugt wird. Die Spannbuchse liegt dabei auch bei Lastwechseln immer vollständig an der Innenwandung der Bohrung an und kann so die Kraft, die auf diese Verbindung wirkt, besser ableiten.

Rotorblätter von Windkraftanlagen werden des Weiteren über ihre Blattwurzel an dem sogenannten Rotorblattlager (auch Pitchlager genannt) der Windkraftanlage verschraubt. Das Rotorblattlager ist wiederum mit der Rotornabe der Windkraftanlage verbunden. Zweck des Rotorblattlagers ist es, das Rotorblatt um seine Längsachse zu verdrehen, um dadurch den Anstellwinkel des Rotorblattes gegenüber der umströmten Luft zu verändern. Daher sind in der Regel das Rotorblattlager und auch die Blattwurzel des Rotorblattes zylindrisch gestaltet.

Die Verbindung von Blattwurzel und Rotorblattlager muss dabei sehr hohe Betriebslasten übertragen können, die auf das Rotorblatt einwirken. Dabei handelt es sich vor allem um Biegemomente quer zur Längsachse des Rotorblattes.

In der Praxis werden derzeit zwei verschiedene Arten von Blattverschraubungen eingesetzt, mit denen die Blattwurzel an dem Pitchlager fest verbunden wird. Dies sind zum einen eine sogenannte T-Bolzenverschraubung und zum anderen eine Insertverschraubung. Bei der T-Bolzenverschraubung wird ein Bolzen in eine Bohrung eingeführt, der über eine entsprechende Bohrung in axialer Längsrichtung des Rotorblattes (quer zum Bolzen) verfügt. In diese Bohrung ist ein Gewinde eingeschnitten, in das ein Bolzen eingeschraubt werden kann, der die Blattwurzel dann mit dem Pitchlager verbindet. Bei der Insertverschraubung werden metallische Hülsen mit einem Innengewinde verwendet, welche in die Blattwurzel eingebettet werden. Ein Längsbolzen verschraubt die metallische Hülse dann mit dem Pitchlager.

In beiden Fällen muss die Laminatdicke an der Blattwurzel jedoch aufgedickt werden, was in der Regel zu einem höheren Gewicht und zu einem größeren Außendurchmesser des Rotorblattes an der Blattwurzel führt. Bei der Verwendung von T-Bolzen und einem typischen Längsbolzendurchmesser von M36 muss das Laminat an der Blattwurzel auch ca. 100 mm aufgedickt werden. Dennoch ist die Tragfähigkeit pro Bauraum bei dieser Art der Verschraubung relativ gering.

Zwar wird durch eine Vergrößerung des Wurzeldurchmessers die Belastung pro Verbindungselement des Blattanschlusses reduziert, allerdings nimmt bei zunehmender Blattlänge die Belastung pro Verbindungselement auf der anderen Seite überproportional zu. Hier sind insbesondere die zyklischen Lasten ausschlaggebend, die in etwa proportional zum Blattgewicht sind. Soll die Last pro Verbindungselement konstant bleiben, so muss der Wurzeldurchmesser schneller steigen als die Blattlänge, so dass in der Praxis bei zunehmender Blattlänge der Wurzeldurchmesser im Verhältnis zur Blattlänge immer größer wird (typische bei T-Bolzen und Insertverschraubung). Dies führt jedoch zu erheblichen Transport- und Fertigungsproblemen.

Eine kritische Grenze für den Wurzeldurchmesser von Onshore-Windkraftanlagen stellt die Brückenhöhe auf Autobahnen und Bundesstraßen dar, welche in Deutschland in der Regel 4,5 m beträgt. Können diese Brücken nicht unterfahren werden, so kann der Transport der Rotorblätter zum Errichtungsstandort, selbst wenn sie segmentiert sind, nicht mehr über das Straßennetz erfolgen. Mit etwas Toleranzabzug ist also 4,0 bis 4,3 m das absolute Höchstmaß für den Wurzeldurchmesser. Gegenwärtig haben Rotorblätter von 60 bis 80 m einen Wurzeldurchmesser von 2,5 bis 3 m. Bei einer Blattlänge von ca. 100 m erreicht der Wurzeldurchmesser der Blattwurzel ein kritisches Maß, so dass bei einer optimistischen Abschätzung ca. 100 Meter Rotorblattlänge das Limit für den Straßenverkehr darstellt.

Des Weiteren nimmt mit zunehmender Bauhöhe des Blattlagers aufgrund des zunehmenden Wurzeldurchmessers der Blattwurzel die Exzentrizität am Blattanschluss weiter zu, wodurch höhere sekundäre Biegemomente im Blattanschluss und Blattlager entstehen, welche die Tragfähigkeit mindern. Für größere Wandstärken und Verbindungselemente werden auch Blattlager mit größerer Bauhöhe benötigt, damit auch die Blattlager eine höhere Tragfähigkeit erhalten. Eine größere Bauhöhe des Lagers wird mit steigendem Blattwurzeldurchmesser auch deshalb benötigt, weil das Lager eine gewisse Eigensteifigkeit benötigt, um sich unter Belastung möglichst wenig zu verformen (Ovalisieren). Mit steigendem Blattwurzeldurchmesser nimmt die Eigensteifigkeit des Lagers ab, wenn die Bauhöhe nicht auch erhöht wird.

Die Verbindungselemente selbst müssen dabei immer größer werden, um höhere Lasten übertragen zu können. Als Längsbolzen am Blattanschluss werden bereits Gewindegrößen von M36 aufwärts eingesetzt. Noch größere Verbindungselemente können aufgrund ihres Gewichts nicht mehr von Hand installiert werden. Auch die Montagewerkzeuge werden immer größer und schwerer. Dadurch steigt der Montageaufwand enorm.

Mit zunehmendem Durchmesser von Blattanschluss und Blattlager müssen auch die Naben der Windenergieanlagen größer werden. Dadurch sinkt deren Steifigkeit, so dass größere Deformationen auftreten, die zu höheren Beanspruchungen von Blattlager und Blattanschluss führen. Außerdem können sehr große Naben nicht mehr in einem Guss hergestellt werden, sondern müssen geteilt ausgeführt werden, was zu Zusatzkosten führt.

Ein Blattanschluss mit einer Insertverschraubung ist außerdem schwierig zu fertigen. Oftmals kommt es beim Aushärten der Blattwurzel oder beim Verkleben der Halbschalen zu einer Abweichung der Bolzenachse vom idealen Teilkreis (Ovalisierung oder Versatz), die im Extremfall eine Verschraubung mit dem Pitchlager unmöglich macht. Außerdem traten in der Vergangenheit immer wieder Havarien von Rotorblättern mit Inserts auf, welche durch ein Herausreißen der Inserts aus dem Wurzellaminat verursacht wurden. Es gibt daher Bestrebungen, auf eine Insertverschraubung an dem Pitchlager zu verzichten.

Aus der EP 1 959 129 A2 ist eine Windkraftanlage bekannt, bei der zwischen dem Pitchlager und der Blattwurzel ein Versteifungselement in Form eines Ringes angeordnet ist, um so die auftretenden Kräfte besser ableiten zu können.

Die DE 10 2010 046 518 A1 beschreibt ein Rotorblatt oder Rotorblattsegment für Windenergieanlagen, ein System mit einem Rotorblattsegment und ein Verfahren zur Befestigung eines Rotorblatts oder Rotorblattsegments. Zur Befestigung des Rotorblatts bzw. des Rotorblattsegments an einer Rotornabe oder an einem anderen Rotorblattsegment ist mindestens ein Seil vorgesehen, das innerhalb des Rotorblatts bzw. des Rotorblattsegments U-förmig umgelenkt ist. Hierdurch soll eine auf das Seil wirkende Zugspannung großflächig in das Rotorblattsegment eingeleitet werden, ohne dass eine zusätzliche Verankerung des Seils erforderlich ist.

Die DE 10 2012 002 203 A1 offenbart ein Großwälzlager als Blattlager für Windkraftanlagen. Das Wälzlager weist zwei äußere und ein inneres Anschlusselement auf, wobei jeweils ein Maschinenteil mit den beiden äußeren und dem inneren Anschlusselement verbunden werden, wodurch sich zwei konzentrische Lager ergeben. Hierdurch sollen eine erhöhte Stabilität, insbesondere gegenüber Kippmomenten oder Wechsellasten, und eine vereinfachte Montage bzw. Demontage ermöglicht werden.

Der DE 10 2013 210 579 A1 sind eine Drehverbindung zur Blattwinkelverstellung eines Rotorblattes sowie ein Verfahren zum Herstellen einer solchen Drehverbindung zu entnehmen. Hierbei wird eine stoffschlüssige Verbindung zwischen dem Rotorblatt und mindestens einem Lagerring hergestellt, beispielsweise durch Laminieren. Diese Verbindungsart soll gegenüber Schraubverbindungen wartungsärmer und stabiler sein.

Die DE 10 2005 026 141 A1 zeigt eine Rotorblatt-Lagereinheit sowie ein Verfahren zum Betrieb einer Windkraftanlage mit einer solchen Rotorblatt-Lagereinheit. Hierbei weist die Lagereinheit wenigstens zwei axial versetzte Laufbahnen mit zylindrischen Wälzkörpern auf, deren Rotationsachsen radial, also etwa lotrecht in Bezug auf die Längsachse des Rotorblattes ausgerichtet sind. Hierdurch sollen insbesondere Kippmomente, Fliehkräfte und aus der Stellung des Rotorblatts resultierende Momente zuverlässig aufgenommen werden.

Aus der DE 10 2017 106 875 A1 ist eine Windkraftanlage mit einer Rotornabe und mindestens einem Rotorblatt bekannt, dessen Blattwurzel mit einer Vielzahl von Befestigungsmitteln an einem Pitchlager befestigbar ist, welche mit der Rotornabe verbunden oder verbindbar ist, sodass mittels des Pitchlagers das Rotorblatt relativ zur Rotornabe um seine Längsachse drehbar ist. Die Befestigungsmittel sind dabei gabelförmige Befestigungselemente ausgebildet, zwischen denen die Blattwurzel eingeschoben und mit Hilfe eines Querbolzens verspannt wird.

Vor diesem Hintergrund ist es Aufgabe der vorliegenden Erfindung eine verbesserte Windkraftanlage mit einem verbesserten Verbindungskonzept der Rotorblätter an die Rotornabe anzugeben, das insbesondere für große Rotorblätter und große Blattwurzeldurchmesser geeignet ist.

Die Aufgabe wird mit der Windkraftanlage gemäß Anspruch 1 erfindungsgemäß gelöst. Vorteilhafte Ausgestaltungen finden sich dann in den entsprechenden Unteransprüchen.

Gemäß Anspruch 1 wird eine Windkraftanlage beansprucht, die eine Rotornabe und mindestens ein Rotorblatt hat, dessen Blattwurzel mit einer Befestigungsanordnung an einem Lagerring eines Rotorblattlagers der Rotornabe befestigt oder befestigbar ist, sodass mittels des Rotorblattlagers durch Drehung des Lagerrings gegenüber der Rotornabe das Rotorblatt relativ zu der Rotornabe um seine Längsachse gedreht werden kann. Gattungsgemäß wird somit mithilfe des Rotorblattlagers ein Pitchwinkel des Rotorblatts eingestellt, um so die Rotorblätter der Windkraftanlage optimal gegenüber dem Wind auszurichten. Dabei weisen die die Blattwurzel und der Lagerring des Rotorblattlagers vorzugsweise im Wesentlichen denselben Durchmesser auf.

Erfindungsgemäß ist nun vorgesehen, dass die Befestigungsanordnung eine Mehrzahl von Befestigungsgarnituren aufweist, wobei jede Befestigungsgarnitur mindestens einen ersten Querbolzen, mindestens einen zweiten Querbolzen und wenigstens eine Befestigungslasche (bevorzugt zwei Befestigungslaschen pro Befestigungsgarnitur) mit mindestens einer ersten Laschenöffnung und mindestens einer zweiten Laschenöffnung hat, und wobei bei jeder Befestigungsgarnitur der wenigstens eine erste Querbolzen quer zur Längsachse des Rotorblattes durch eine erste Bolzenöffnung im Lagerring sowie durch die erste Laschenöffnung der Befestigungslasche und der zweite Querbolzen quer zur Längsachse des Rotorblattes durch eine zweite Bolzenöffnung in der Blattwurzel des Rotorblattes sowie durch die zweite Laschenöffnung geführt ist.

Demnach wird die Blattwurzel an dem Lagerring mithilfe von Befestigungsgarnituren befestigt, die jeweils mindestens eine Befestigungslasche aufweisen, die jeweils mit einem ersten Querbolzen quer zur Längsachse des Rotorblattes am Lagerring und mit einem zweiten Querbolzen quer zur Längsachse des Rotorblattes an der Blattwurzel des Rotorblattes befestigt ist. Jede Befestigungslasche wird somit sowohl an einem Lagerring als auch an der Blattwurzel mithilfe der Querbolzen befestigt, sodass das Rotorblatt über diese Befestigungslaschen an dem Lagerring befestigt wird. Die Befestigungslaschen werden dabei an einer Außenseite und/oder an einer Innenseite sowohl des Lagerrings als auch der Blattwurzel mit Hilfe der Querbolzen befestigt.

Bei den Befestigungslaschen handelt es sich um separate Bauteile, die nicht stoffschlüssig (d. h. beispielsweise geschweißt oder geklebt) mit dem Lagerring und der Blattwurzel verbunden sind. Dies schließt jedoch nicht aus, dass mehrere Befestigungslaschen oder alle Befestigungslaschen miteinander stoffschlüssig verbunden sind und so ein gemeinsames Bauteil bilden.

Bei dem Lagerring handelt es sich bevorzugt um einen Innenring des Rotorblattlagers, dessen Außenring an der Rotornabe befestigt ist. Dieser Innenring ist über Kugeln oder Walzen drehbar an dem Außenring gelagert und erlaubt so eine Drehung um die Längsachse des Rotorblattes.

Dabei werden Lagerring und Blattwurzel mittels der Befestigungsgarnituren so zueinander ausgerichtet, dass die Stirnseite der Blattwurzel und die Stirnseite des Lagerrings einander zugewandt sind. Bevorzugt liegt die Stirnseite der Blattwurzel an der Stirnseite des Lagerrings an.

Dabei kann vorgesehen sein, dass der Lagerring und die Blattwurzel mit ihren Stirnseiten aneinandergefügt und dann mithilfe der Befestigungsgarnituren zusammengefügt werden, sodass hier eine insbesondere kraftschlüssige Verbindung entsteht. Wie später noch gezeigt, kann hierdurch eine Krafteinleitung auch über die Stirnseiten von Lagerring und Blattwurzel erfolgen.

Im Gegensatz zum Stand der Technik wird hierbei auf eine Längsverschraubung und eine Insertverschraubung verzichtet und stattdessen eine Verbindung über Querbolzen realisiert, da diese grundsätzlich höhere Verbindungsfestigkeit erreichen können. So können längere Rotorblätter ermöglicht werden.

Das Rotorblatt kann dabei aus einem Faserverbundwerkstoff aufweisend ein Fasermaterial und ein das Fasermaterial einbettendes Matrixmaterial hergestellt sein. Insbesondere die Blattwurzel des Rotorblattes kann aus einem solchen Faserverbundwerkstoff hergestellt sein. Als Fasermaterial eignen sich hierbei beispielsweise GFK oder ein CFK. Denkbar ist allerdings auch, dass ein Faser-Metall-Laminat (FML) Werkstoff eingesetzt wird, bei dem sich Lagen von Fasermaterial eines Faserverbundwerkstoffes und Lagen von Metallmaterial eines Metallwerkstoffes abwechseln und so eine besonders hohe Verbindungsfestigkeit (insbesondere eine hohe Lochleibungsfestigkeit) erreichen.

Das Material der Befestigungslaschen kann dabei beispielsweise ein Metallmaterial (Stahl, z.B. 1.7225) sein. Metallische Befestigungslaschen können kostengünstig aus Blechen (Dicke vorzugsweise 10 bis 100 mm) hergestellt werden, beispielsweise durch Plasmaschneiden, Wasserstrahlschneiden, Laserschneiden, Drahterodieren oder Stanzen. Alternativ können die Befestigungslaschen auch in variablen, lastgerechten Dicken geschmiedet oder gegossen werden.

Alternativ zu den metallischen Werkstoffen können die Befestigungslaschen auch aus einem FML (Faser-Metall-Laminat) gefertigt werden, bspw. ähnlich dem FML, welches in der Blattwurzel des Rotorblattes eingesetzt werden kann. Dadurch kann das Gewicht der Befestigungsanordnung insgesamt reduziert werden, was die Montage vereinfacht. Alternativ werden die Befestigungslaschen aus einem reinen Faserverbundwerkstoff hergestellt, um weiter Gewicht zu sparen. Mittels faserverstärktem 3D-Druck oder Fiber Placement/Tape Laying können dabei die Fasern optimal in Lastrichtung ausgerichtet werden, und zwar insbesondere in radialer und tangentialer Richtung an den Laschenöffnungen.

Mithilfe der vorliegenden Erfindung wird es möglich, den Lagerring des Blattlagers mit deutlich niedrigerer Bauhöhe (ca. Faktor 2) als bei konventionellen Blatt lagern auszuführen. Dies wird möglich, da auf den Längsbolzen und die entsprechenden Bohrungen im Lagerring verzichtet wird. Stattdessen wird der Lagerring in Blattlängsrichtung länger gestaltet. An der Verlängerung sind Querbohrungen angebracht, über die per Lochleibung Kräfte eingeleitet werden. Der Vorteil dieses gestreckten Lagerrings ist insbesondere die verringerte Exzentrizität am Blattlager, wodurch die ungünstigen sekundären Biegemomente sinken. Die Masse des Lagerrings bleibt dabei in etwa gleich im Vergleich zum Stand der Technik, denn Zusatzmasse durch die Verlängerung werden durch die Einsparung aufgrund der verminderten Bauhöhe aufgehoben.

Gemäß einer Ausführungsform ist vorgesehen, dass der erste Querbolzen einer ersten Befestigungsgarnitur und der zweite Querbolzen einer der ersten Befestigungsgarnitur gegenüberliegenden zweiten Befestigungsgarnitur über zumindest ein erstes Schubverbindungselement miteinander verbunden sind und/oder dass der zweite Querbolzen der ersten Befestigungsgarnitur und der erste Querbolzen der zweiten Befestigungsgarnitur über zumindest ein zweites Schubverbindungselement miteinander verbunden sind.

Somit können die Schubkräfte sicher über die Befestigungsanordnung übertragen und abgetragen werden und damit die Befestigungsanordnung im Blattwurzelbereich deutlich tragfähiger gestaltet werden. Dabei kann vorgesehen sein, dass das Schubverbindungselement immer paarweise, sich gegenüberliegende Befestigungsgarnituren miteinander verbindet, sodass jede Befestigungsgarnitur über ein Schubverbindungselement mit einer gegenüberliegenden Befestigungsgarnituren verbunden ist. Außerdem kann durch die Schubverbindungselemente eine Ovalisierung von Blattanschluss und Pitchlager verhindert oder zumindest stark verringert werden. Dabei kann es sinnvoll sein, dass die Querbolzen einen Bolzenkopf haben, der sich am Laminat abstützt, damit die Querbolzen nicht in radialer Richtung verbschoben werden, wenn die Schubverbindungselemente Kräfte einleiten.

Dabei kann auch vorgesehen sein, dass ein Paar sich gegenüberliegende Befestigungsgarnituren, welches über Schubverbindungselemente miteinander verbunden werden soll, zwei Schubverbindungselemente aufweist, die über Kreuz eine entsprechende Schubverbindung herstellen, um so eine optimale Abtragung der Schubkräfte zu erreichen. Dabei wird der erste Querbolzen der ersten Befestigungsgarnituren mit dem zweiten Querbolzen der zweiten Befestigungsgarnituren über ein erstes Schubverbindungselement und der zweite Querbolzen der ersten Befestigungsgarnituren mit dem ersten Querbolzen der zweiten Befestigungsgarnituren über ein zweites Schubverbindungselement verbunden.

Die Schubverbindungselement der können dabei beispielsweise in Form einer Schubstange ausgebildet sein.

Gemäß einer Ausführungsform ist vorgesehen, dass die Befestigungslaschen an ihren beiden Enden jeweils einen Kopfabschnitt mit den Laschenöffnungen aufweisen, die über einen Mittenabschnitt miteinander verbunden sind, wobei die Breite des Mittenabschnittes gegenüber dem Kopfabschnitt verjüngt ist.

Dies ermöglicht eine weitere Gewichts- und Kosteneinsparung insbesondere dann, wenn eine Vielzahl dieser Befestigungslaschen in der Befestigungsanordnung verwendet werden.

Gemäß einer Ausführungsform ist vorgesehen, dass in zumindest einer der Bolzenöffnungen eine Buchse mit einer in Bezug auf die Längsachse der Öffnung konisch verlaufenden Innenwandung eingebracht ist, die mit einem Querbolzen mit einer konischen Außenwandung im eingesetzten Zustand derart zusammenwirkt, dass eine radiale Spannkraft auf die Innenwandung der Bolzenöffnung aufgebracht wird.

Durch die Verwendung einer solchen Spannbuchse wird der Querbolzen ohne Spiel in der Bolzenöffnung positioniert, sodass eine bestmögliche Kraftübertragung realisiert werden kann. Dabei kann vorgesehen sein, dass die Spannbuchse einen Flansch aufweist, um im Randbereich der Bolzenöffnung an der Außenseite anzuliegen.

Des Weiteren kann es vorgesehen sein, dass die Spannbuchse und/oder der Querbolzen exzentrisch sind, um so die relative Entfernung zwischen dem ersten Querbolzen und dem zweiten Querbolzen einstellen zu können.

Gemäß einer Ausführungsform ist vorgesehen, dass das Rotorblatt zumindest im Bereich der Blattwurzel aus einem Faser-Metall-Laminat gebildet ist, welches sich abwechselnde Faserlagen eines Faserverbundwerkstoffes und Metalllagen eines Metallwerkstoffes aufweist.

Hierdurch kann zumindest im Bereich der Blattwurzel eine hohe Lochleibungsfestigkeit erreicht werden.

Gemäß einer Ausführungsform ist vorgesehen, dass zumindest eine der Befestigungsgarnituren eine erste Befestigungslasche und eine zweite Befestigungslasche hat, die jeweils mit dem ersten Querbolzen und den zweiten Querbolzen verbunden sind, wobei die erste Befestigungslasche an einer Außenseite des Rotorblattes und die zweite Befestigungslasche an einer Innenseite des Rotorblattes angeordnet sind.

In dieser Ausführungsform weist zumindest eine Befestigungsgarnitur, vorzugsweise alle Befestigungsgarnituren, jeweils zwei Befestigungslaschen auf, die beide durch den ersten und den zweiten Querbolzen an dem Lagerring und der Blattwurzel befestigt sind. Die Befestigungslaschen einer solchen Befestigungsgarnitur sind dabei so angeordnet, dass zwischen der ersten Befestigungslasche und der zweiten Befestigungslasche im Bereich des ersten Querbolzens der Teil des Lagerring und im Bereich des zweiten Querbolzens der Teil der Blattwurzel vorgesehen ist.

Gemäß einer Ausführungsform ist vorgesehen, dass zumindest einer der Querbolzen einer Befestigungsgarnitur als axiales Vorspannelement ausgebildet ist, welches im eingesetzten Zustand eine rotorblattbezogene axiale Vorspannung auf die wenigstens eine Befestigungslasche der Befestigungsgarnitur derart ausübt, dass die Blattwurzel mit ihrer Blattwurzelstirnseite an eine Lagerringstirnseite des Lagerrings gepresst wird.

Eine solche axiale Vorspannung kann beispielsweise durch eine Exzenterbuchse oder einen exzentrischen Querbolzen realisiert werden, die durch Drehung im eingesetzten Zustand entweder den Abstand zwischen den beiden Bolzenöffnungen oder den Abstand zwischen den beiden Laschenöffnungen verändert.

Durch die axiale Vorspannung werden die Stirnseiten des Lagerrings und der Blattwurzel aneinandergepresst, sodass zwischen ihnen kein Spiel mehr existiert und entsprechende Kräfte von der Blattwurzel über die Stirnseiten auf das Rotorblattlager übertragen werden können. Somit kann auch ohne einen Längsbolzen eine Vorspannung zwischen der Blattwurzel und dem Lagerring in Blatt Längsrichtung erzeugt werden, was insbesondere für die Fatigue-Beanspruchung vorteilhaft ist. Außerdem können hierdurch Fertigungstoleranzen der Blattwurzel (beispielsweise Abweichungen von der Kreisform, Dickenschwankungen des Laminats, etc.) ausgeglichen werden.

Gemäß einer Ausführungsform hierzu ist vorgesehen, dass die Laschenöffnung der Befestigungslasche, in die das axiale Vorspannelement eingesetzt ist, als Aussparung in der Befestigungslasche ausgeführt ist, wobei die Aussparung in Rotorblattlängsrichtung größer ist als quer dazu.

Eine solche Aussparung kann bspw. ein Langloch sein.

Die Erfindung wird anhand der beigefügten Figuren beispielhaft näher erläutert. Es zeigen:
Figur 1 Längsverschraubung nach dem Stand der Technik;
Figur 2 Befestigungsanordnung nach der vorliegenden Erfindung in einer ersten Ausführungsform
Figur 3 Befestigungsanordnung nach der vorliegenden Erfindung in einer zweiten Ausführungsform
Figur 4 Befestigungsanordnung in einer Ausführungsform mit axialer Vorspannung am Querbolzen;
Figur 5 Darstellung verschiedener Ausführungsformen der Befestigungslaschen.

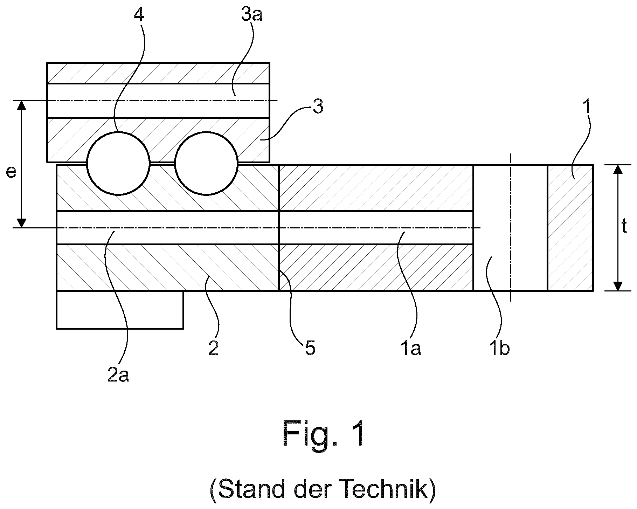

Figur 1 zeigt im Querschnitt eine Längsverschraubung nach dem Stand der Technik, bei der die Blattwurzel 1 eines nicht weiter dargestellten Rotorblattes an einem Lagerring 2 eines Rotorblattlagers 3 befestigt ist. Das Rotorblattlagers 3 ist dabei mit der Rotornabe der Windkraftanlage über eine Verschraubung 3a fest verbunden. Der Lagerring 2 ist dabei über ein Kugellager 4 drehbar an dem Rotorblattlagers 3 gelagert. Der Lagerring 2 ist im Beispiel der Figur 1 als drehbar gelagerter Innenring ausgebildet.

In dem Lagerring 2 sowie in der Blattwurzel 1 befindet sich eine axiale Längsbohrung 1a, 2a, in die ausgehend von der Rotorblattnabe ein Längsbolzen eingeschoben werden kann. In der Blattwurzel 1 befindet sich des Weiteren am Ende der axialen Längsbohrung 1a eine Querbohrung 1b, in die ein Bolzen eingeschoben werden kann, der eine quer zur Achse des Bolzens liegendes Innengewinde aufweist. Dieses Innengewinde des in die Querbohrung 1b eingeführten Bolzens liegt somit axial zu den axialen Längsbohrungen 1a, 2a, sodass der in die Längsbohrung eingeführte Bolzen am Ende mit dem Innengewinde des Bolzens in der Querbohrung 1b verschraubt werden kann.

Durch diese aus dem Stand der Technik bekannte Längsverschraubung ergibt sich das Problem, dass die Dicke t des Blattwurzellaminates der Blattwurzel 1 sowie die Dicke des Lagerrings 2 so groß sein muss, dass sowohl die Längsbohrungen 1a, 2a erstellt werden können und das darüber hinaus genügend Material verbleibt, um an den Stirnseiten 5 von Blattwurzel 1 und Lagerring 2 eine ausreichend große Auflagefläche zu realisieren, damit die auftretenden Belastungen, Kräfte und Momente abgetragen werden können.

Hierdurch entsteht eine große Dicke des Lagerring 2, der zu einer vergrößerten Exzentrizität e zwischen der Längsbohrung 2a des Lagerring 2 und der Längsbohrung 3a des Rotorblattlagers 3 führt. Hierdurch erhöhen sich die ungünstigen sekundären Biegemomente.

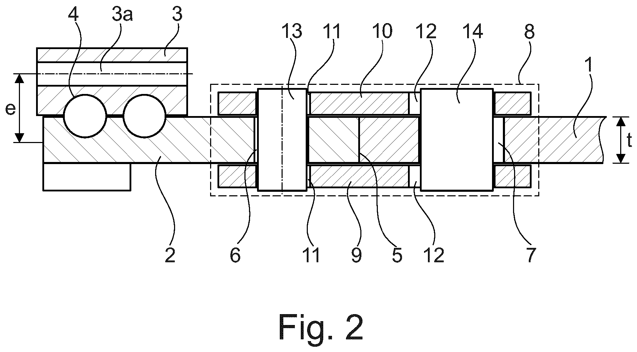

Figur 2 zeigt in einem Querschnitt das erfindungsgemäße Befestigungskonzept gemäß der vorliegenden Erfindung. Auf eine Längsbohrung im Lagerring 2 sowie in der Blattwurzel 1 kann nunmehr verzichtet werden, wodurch die Dicke t der Blattwurzel 1 und des Lagerring 2 reduziert werden kann. Hierdurch wird die Exzentrizität e zwischen Lagerring 2 und Rotorblattlager 3 reduziert, wodurch die ungünstigen sekundären Biegemomente sinken.

Hierfür weist sowohl der Lagerring 2 eine Bolzenöffnung 6 als auch die Blattwurzel 1 eine Bolzenöffnung 7 auf, die als Querbohrung ausgeführt ist. Die Öffnungen 6, 7 sind somit quer zur axialen Längsrichtung des Rotorblattes ausgeführt. Sowohl an der äußeren Seite als auch an der inneren Seite des Rotorblattes wird dann zum Erstellen einer Befestigungsgarnitur 8 jeweils eine Befestigungslasche 9 und 10 angeordnet, die im Bereich der Bolzenöffnungen 6, 7 jeweils eine Laschenöffnung 11, 12 aufweisen.

In die erste Bolzenöffnung 6 des Lagerrings 2 wird nun durch die erste Laschenöffnung 11 der beiden Befestigungslaschen 9, 10 ein erster Querbolzen 13 eingeschoben, während in die zweite Bolzenöffnung 7 der Blattwurzel 1 durch die zweite Laschenöffnung 12 der beiden Befestigungslaschen 9, 10 ein zweiter Querbolzen 14 eingeführt und befestigt wird. Die beiden Querbolzen 13, 14 sind in Figur 2 nur schematisch angedeutet.

Die zweite Laschenöffnung 12 der beiden Befestigungslaschen 9, 10 sowie die zweite Bolzenöffnung 7 sind dabei als Langloch längs des Rotorblattes ausgebildet, wobei der Querbolzen 14 als ein axiales Vorspannelement bezogen auf die Längsrichtung des Rotorblattes ausgebildet ist. Durch dieses Vorspannelement als Querbolzen 14 kann aufgrund der Kraftübertragung der beiden Befestigungslaschen 9, 10 die Blattwurzel 1 mit ihrer Stirnseite 5 an die Stirnseite des Lagerring 2 gepresst werden, um so die auftretenden Kräfte und Momente entsprechend übertragen zu können. Im Allgemeinen wird unter einem Langloch hier jedwede Aussparung verstanden, deren Öffnung in Blattlängsrichtung größer ist als quer dazu.

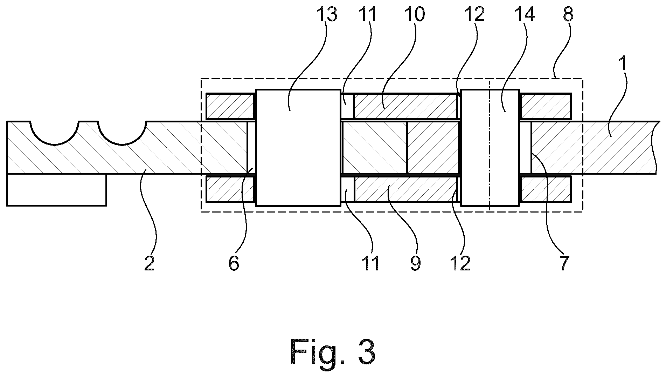

Im Ausführungsbeispiel der Figur 3 ist im Gegensatz zur Figur 2 die erste Bolzenöffnung 6 sowie die erste Laschenöffnung 11 der beiden Befestigungslaschen 9, 10 als Langloch ausgebildet, wobei in diesem Ausführungsbeispiel dann der erste Querbolzen 13 als Vorspannelement ausgebildet ist.

Denkbar ist selbstverständlich auch, dass alle Bolzenöffnungen und alle Laschenöffnungen als Langloch ausgebildet sind und dass die beiden Querbolzen beide als Vorspannelement ausgebildet sind.

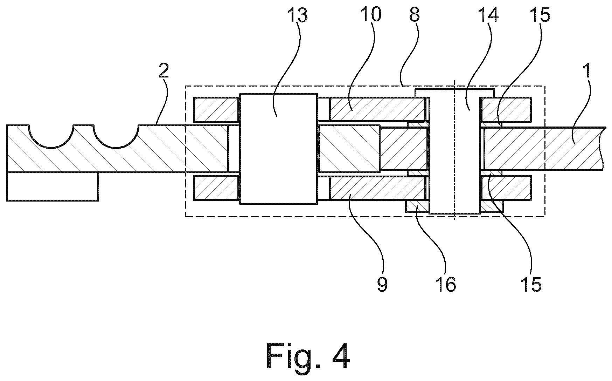

Figur 4 zeigt ein Ausführungsbeispiel, das auf dem Ausführungsbeispiel der Figur 3 beruht und bei dem der erste Querbolzen 13 als Vorspannelement ausgebildet ist. Der zweite Querbolzen 14 ist dabei als Flanschbolzen ausgeführt und kann so in Kombination mit den beidseitig der Bolzenöffnung 7 vorgesehenen Unterlegscheiben 15 und der gegenüber dem Flansch angeschraubt Mutter 16 eine Vorspannung in axialer Richtung des zweiten Querbolzens 14 aufbringen. Dadurch wird das Laminat der Blattwurzel 1 in Dickenrichtung gestützt, was die Lochleibungsfestigkeit erhöht. Dadurch kann die Blattwurzel 1 in dieser Variante dünner ausgeführt werden, ohne an Tragfähigkeit einzubüßen.

Dabei ist es denkbar, dass die Blattwurzel 1 nicht vollständig rund ausgeführt ist, sondern eine Art n-Eck mit ebenen Flächen beschreibt, damit die Unterlegscheiben 15 eine ebene Pressfläche haben. Alternativ können die Unterlegscheiben 15 auch an die Krümmung der Blattwurzel 1 angepasst sein. Dies gilt selbstverständlich auch für die Befestigungslaschen in jedweder Ausführungsform.

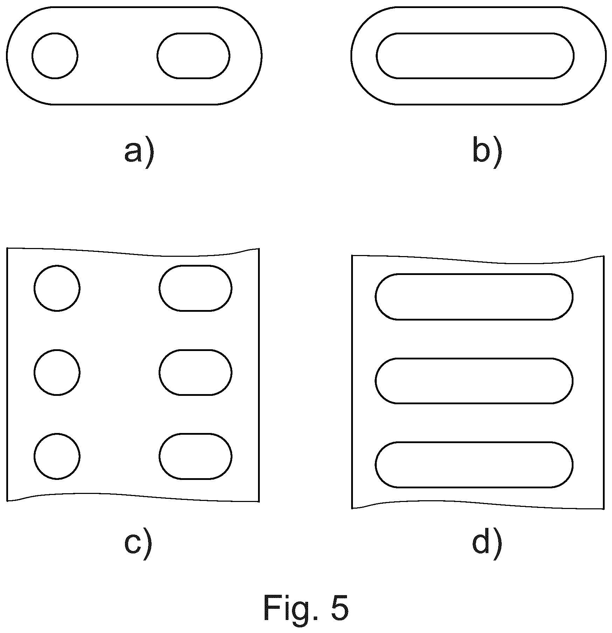

Figur 5 zeigt schließlich verschiedene Ausführungsformen der Befestigungslaschen. Bei der Standardvariante a) ist eine Laschenöffnung als runde Bohrung ausgeführt, während die andere Laschenöffnung als Langloch ausgebildet ist. In einer alternativen Ausführungsform b) weist die Befestigungslasche nur ein einziges Langloch auf, welches die beiden Laschenöffnungen bereitstellt.

**In** den Ausführungsformen c) und d) sind die Befestigungslaschen zu einem gemeinsamen Bauelement zusammengeführt und können so beispielsweise in Form eines Ringes sowohl außen als auch innen eingesetzt werden.

Das gemeinsame Bauelement kann dabei einen Vollkreis, Halbkreis, Viertelkreis etc. bilden. Die Größe sollte in Abhängigkeit von der Handhabbarkeit einerseits und der Versteifungswirkung andererseits festgelegt werden. Hier erscheint ein Sechstel bis Zwölftel-Kreis besonders günstig.

Auch das Blattwurzellaminat wird häufig aus vorgefertigten Segmenten hergestellt. Hier erscheint es günstig, die gleiche Teilung wie für das gemeinsame Bauelement zu verwenden, denn zwischen den Bohrungen zweier benachbarter Segmente ist in tangentialer Richtung immer etwas mehr Abstand als zwischen Bohrungen innerhalb eines Segments. Durch gleiche Teilung wird der Platz am effizientesten genutzt.

### Bezugszeichenliste

1 Blattwurzel
1a Längsbohrung in der Blattwurzel
1b Querbohrung in der Blattwurzel
2 Lagerring
3 Rotorblattlager
3a Längsbohrung im Rotorblattlager
4 Kugellager/Walzlager, etc
5 Stirnseiten
6 erste Bolzenöffnung
7 zweite Bolzenöffnung
8 Befestigungsgarnitur
9 Befestigungslasche (innen)
10 Befestigungslasche (außen)
11 erste Laschenöffnung
12 zweite Laschenöffnung
13 erster Querbolzen
14 zweiter Querbolzen
15 Unterlegscheiben
16 Mutter

## Patentansprüche

1. Windkraftanlage mit einer Rotornabe und mit mindestens einem Rotorblatt, dessen Blattwurzel (1) mit einer Befestigungsanordnung an einem Lagerring (2) eines Rotorblattlagers (3) der Rotornabe befestigt oder befestigbar ist, sodass mittels des Rotorblattlagers (3) durch Drehung des Lagerrings (2) gegenüber der Rotornabe das Rotorblatt relativ zu der Rotornabe um seine Längsachse drehbar ist, **dadurch gekennzeichnet, dass**
a. die Befestigungsanordnung eine Mehrzahl von Befestigungsgarnituren (8) aufweist,
b. wobei jede Befestigungsgarnitur (8) mindestens einen ersten Querbolzen (13), mindestens einen zweiten Querbolzen (14) und wenigstens eine Befestigungslasche (9, 10) mit mindestens einer ersten Laschenöffnung (11) und mindestens einer zweiten Laschenöffnung (12) hat, und
c. wobei bei jeder Befestigungsgarnitur (8) der wenigstens eine erste Querbolzen (13) quer zur Längsachse des Rotorblattes durch eine erste Bolzenöffnung (6) im Lagerring (2) sowie durch die erste Laschenöffnung (11) der Befestigungslasche (9, 10) und der zweite Querbolzen (14) quer zur Längsachse des Rotorblattes durch eine zweite Bolzenöffnung (7) in der Blattwurzel (1) des Rotorblattes sowie durch die zweite Laschenöffnung (12) geführt ist.

2. Windkraftanlage nach Anspruch 1, **dadurch gekennzeichnet, dass** der erste Querbolzen (13) einer ersten Befestigungsgarnitur (8) und der zweite Querbolzen (14) einer der ersten Befestigungsgarnitur (8) gegenüberliegenden zweiten Befestigungsgarnitur (8) über zumindest ein erstes Schubverbindungselement miteinander verbunden sind und/oder dass der zweite Querbolzen (14) der ersten Befestigungsgarnitur (8) und der erste Querbolzen (13) der zweiten Befestigungsgarnitur (8) über zumindest ein zweites Schubverbindungselement miteinander verbunden sind.

3. Windkraftanlage nach Anspruch 1 oder 2, **dadurch gekennzeichnet, dass** die Befestigungslaschen (9, 10) an ihren beiden Enden jeweils einen Kopfabschnitt mit den Laschenöffnungen (11, 12) aufweisen, die über einen Mittenabschnitt miteinander verbunden sind, wobei die Breite des Mittenabschnittes gegenüber dem Kopfabschnitt verjüngt ist.

4. Windkraftanlage nach einem der vorhergehenden Ansprüche, **dadurch gekennzeichnet, dass** in zumindest einer der Bolzenöffnungen (6, 7) eine Buchse mit einer in Bezug auf die Längsachse der Öffnung konisch verlaufenden Innenwandung eingebracht ist, die mit einem Querbolzen (13, 14) mit einer konischen Außenwandung im eingesetzten Zustand derart zusammenwirkt, dass eine radiale Spannkraft auf die Innenwandung der Bolzenöffnung (6, 7) aufgebracht wird.

5. Windkraftanlage nach einem der vorhergehenden Ansprüche, **dadurch gekennzeichnet, dass** das Rotorblatt zumindest im Bereich der Blattwurzel (1) aus einem Faser-Metall-Laminat gebildet ist, welches sich abwechselnde Faserlagen eines Faserverbundwerkstoffes und Metalllagen eines Metallwerkstoffes aufweist.

6. Windkraftanlage nach einem der vorhergehenden Ansprüche, **dadurch gekennzeichnet, dass** zumindest eine der Befestigungsgarnituren (8) eine erste Befestigungslasche (10) und eine zweite Befestigungslasche (9) hat, die jeweils mit dem ersten Querbolzen (13) und den zweiten Querbolzen (14) verbunden sind, wobei die erste Befestigungslasche (10) an einer Außenseite des Rotorblattes und die zweite Befestigungslasche (9) an einer Innenseite des Rotorblattes angeordnet sind.

7. Windkraftanlage nach einem der vorhergehenden Ansprüche, **dadurch gekennzeichnet, dass** zumindest einer der Querbolzen (13, 14) einer Befestigungsgarnitur (8) als axiales Vorspannelement ausgebildet ist, welches im eingesetzten Zustand eine rotorblattbezogene axiale Vorspannung auf die wenigstens eine Befestigungslasche (9, 10) der Befestigungsgarnitur (8) derart ausübt, dass die Blattwurzel (1) mit ihrer Blattwurzelstirnseite an eine Lagerringstirnseite des Lagerrings (2) gepresst wird.

8. Windkraftanlage nach Anspruch 7, **dadurch gekennzeichnet, dass** die Laschenöffnung (11, 12) der Befestigungslasche (9, 10), in die das axiale Vorspannelement eingesetzt ist, als Aussparung in der Befestigungslasche (9, 10) ausgeführt ist, wobei die Aussparung in Rotorblattlängsrichtung größer ist als quer dazu.
